# FASCICULE DE BREVET EUROPEEN

(11) **EP 2 794 669 B1**
(45) Date de publication et mention de la délivrance du brevet: **17.11.2021**
(21) Numéro de dépôt: 12788551.5
(22) Date de dépôt: 22.11.2012
(51) Int. Cl.: C08C 19/42, C08C 19/44, C08K 5/00, C08K 5/103, C08L 15/00, B60C 1/00

(54) **COMPOSITION DE CAOUTCHOUC**
KAUTSCHUKZUSAMMENSETZUNG
RUBBER COMPOSITION

(30) Priorité: 22.12.2011 FR 1162247
(43) Date de publication de la demande: 29.10.2014
(73) Titulaire: Compagnie Générale des Etablissements Michelin, 63000 Clermont-Ferrand (FR)
(72) Inventeur: CLADIERE, Julien, 63040 Clermont-Ferrand Cédex 9 (FR); VARAGNIAT, Franck, 63040 Clermont-Ferrand Cédex 9 (FR); LOPITAUX, Garance, 63040 Clermont-Ferrand Cédex 9 (FR); VASSEUR, Didier, 63040 Clermont-Ferrand Cédex 9 (FR); MARECHAL, Jean-Marc, 63040 Clermont -Ferrand Cedex 9 (FR)
(74) Mandataire: Gandon-Pain, Sylvie
(86) Numéro de dépôt international: PCT/EP2012/073310
(87) Numéro de publication internationale: WO 2013/092096

(56) Documents cités:
- WO-A1-2004/022644
- FR-A1- 2 930 554
- US-A1- 2011 198 010

## Description

Le domaine de l'invention est celui des compositions de caoutchouc pour pneumatiques, plus précisément des compositions de caoutchouc pour bande de roulement.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme sur route mouillée.

L'amélioration de l'adhérence sur sol humide sans être au détriment de la résistance au roulement est une préoccupation constante chez les manufacturiers de pneumatiques.

Il est connu d'introduire des élastomères copolymères d'isoprène et de styrène dans des compositions de caoutchouc renforcées de silice pour bande de roulement de pneumatiques pour améliorer la performance d'adhérence sur sol mouillé de ces pneumatiques. A ce titre on peut se référer aux brevets US 5,294,663 et US 6,812,277. Dans la demande EP 1 669 401 il est divulgué l'utilisation des élastomères copolymères fonctionnels d'isoprène conjointement avec un agent de couplage dont la fonction mercaptan est bloquée, en vue d'améliorer la mise en œuvre des compositions de caoutchouc renforcées d'une silice et comportant ces copolymères d'isoprène. FR 2 930 554 A1 divulgue un mélange élastomérique issu de la modification d'un élastomère diénique par un agent de couplage introduisant dans la chaîne élastomérique un groupe amino-alcoxysilane.

Les Demanderesses ont découvert de façon inattendue que l'utilisation conjointe d'un système plastifiant et d'un élastomère copolymère fonctionnel silanol ou alcoxysilane à base au moins d'isoprène et de styrène, dans une composition renforcée d'une charge inorganique, permettait d'améliorer encore davantage l'adhérence sur sol mouillé de pneumatique à base de copolymères au moins d'isoprène et de styrène.

Ainsi un premier objet de l'invention est une composition de caoutchouc à base d'au moins une charge renforçante comprenant une charge inorganique renforçante, un système plastifiant composé d'au moins une résine hydrocarbonée plastifiante et un plastifiant liquide, un élastomère copolymère au moins d'isoprène et de styrène et un agent de couplage pour lier la charge inorganique à l'élastomère, lequel élastomère porte au moins une fonction SiOR, R étant l'hydrogène ou un radical alkyle en C₁ - C₁₀, cycloalkyle en C₅-C₁₈, aryle en C₆ - C₁₈ ou aralkyle en C₇ - C₁₈.

Un autre objet de l'invention est un produit semi-fini en caoutchouc comprenant une composition telle que définie ci-dessus.

L'invention a également pour objet un pneumatique comprenant un produit semi-fini en caoutchouc, préférentiellement une bande de roulement, qui soit conforme à l'invention. Un tel pneumatique présente une adhérence sur sol mouillé amélioré et en particulier un compromis de performance amélioré entre l'adhérence sur sol mouillé et la résistance au roulement.

L'invention a aussi pour objet un procédé de préparation d'une composition de caoutchouc telle que définie ci-dessus.

L'invention ainsi que ses avantages seront aisément compris à la lumière de la description et des exemples de réalisation qui suivent.

### I- DESCRIPTION DETAILLEE DE L'INVENTION

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse.

En ce qui concerne les taux de fonctions, un taux de fonction pour une fonction donnée exprimé en x% signifie que x chaînes sur 100 chaînes portent la fonction donnée. L'abréviation "pce" signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Une caractéristique essentielle de la composition de caoutchouc conforme à l'invention est de comprendre un élastomère qui est un copolymère au moins d'isoprène et de styrène et qui porte au moins une fonction SiOR, R étant l'hydrogène ou un radical alkyle en C₁ ― C₁₀, cycloalkyle en C₅-C₁₈, aryle en C₆ ― C₁₈ ou aralkyle en C₇ ―C₁₈.

Pour la synthèse de tels copolymères d'isoprène et de styrène qui sont porteur d'au moins une (c'est-à-dire une ou plusieurs) fonction de formule SiOR, on peut se référer aux documents JP 63-215701, JP 62-227908, US 5 409 969 ou WO 2006/050486.

Le copolymère au moins d'isoprène et de styrène peut avoir toute microstructure qui est fonction des conditions de polymérisation utilisées, notamment de la présence ou non d'un agent modifiant et/ou randomisant et des quantités d'agent modifiant et/ou randomisant employées. Le copolymère au moins d'isoprène et de styrène est préparé préférentiellement par polymérisation anionique.

Le copolymère au moins d'isoprène et de styrène peut être un polymère linéaire ou étoilé, voire branché. Si c'est un polymère linéaire, il peut être couplé ou non. Le copolymère au moins d'isoprène et de styrène peut avoir une distribution moléculaire monomodale, bimodale ou polymodale.

Selon une variante de l'invention, particulièrement préférée, le copolymère est constitué seulement d'unité d'isoprène et de styrène.

Dans le cas de copolymères d'isoprène et de styrène conviennent notamment ceux ayant une teneur en styrène comprise entre 5% et 50% en poids et une Tg comprise entre - 5 C et - 50°C.

Selon une autre variante de l'invention, le copolymère peut comprendre des unités issues d'au moins un monomère diène conjugué autre que l'isoprène. Le copolymère au moins d'isoprène et de styrène est alors préférentiellement un terpolymère constitué d'unités d'isoprène, de styrène et de butadiène.

Dans le cas de terpolymères de butadiène, d'isoprène et de styrène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

Selon un mode de réalisation préférentiel de l'invention, le copolymère au moins d'isoprène et de styrène porte une seule fonction SiOR, préférentiellement en extrémité de chaîne du copolymère ou plus préférentiellement à l'intérieur de la chaîne du copolymère. De tels élastomères sont par exemple obtenus par réaction de la chaîne copolymère vivante avec un agent de fonctionnalisation ou par le couplage d'au moins deux chaînes copolymères vivantes entre elles par l'intermédiaire d'un agent de couplage qui apporte la fonction SiOR.

Selon un premier mode de réalisation de l'invention, le copolymère au moins d'isoprène et de styrène est porteur d'au moins une (c'est-à-dire une ou plusieurs) fonction dite « silanol » de formule SiOH (R est l'hydrogène).

Selon ce premier mode de réalisation, le copolymère au moins d'isoprène et de styrène porte préférentiellement une fonction silanol SiOH située en extrémité de la chaîne copolymère, en particulier sous la forme d'un groupement diméthylsilanol -SiMe₂SiOH.

Selon un second mode de réalisation, le copolymère au moins d'isoprène et de styrène est porteur d'au moins une (c'est-à-dire une ou plusieurs) fonction silyléther, auquel cas R dans la formule SiOR est un radical alkyle en C₁ ― C₁₀, cycloalkyle en C₅-C₁₈, aryle en C₆ ― C₁₈ ou aralkyle en C₇ ― C₁₈. Le radical R est préférentiellement un alkyle de 1 à 6 atomes de carbone, encore plus préférentiellement de 1 à 4 atomes de carbone, en particulier un méthyle ou un éthyle.

Selon un autre mode de réalisation particulièrement préférentiel, applicable à chacun des modes de réalisation précédemment décrit, le copolymère au moins d'isoprène et de styrène, porteur d'au moins une (c'est-à-dire une ou plusieurs) fonction de formule SiOR est aussi porteur d'au moins une autre (c'est-à-dire une ou plusieurs) fonction qui est différente de la fonction SiOR. Cette autre fonction est préférentiellement une amine, l'amine pouvant être une amine primaire, secondaire ou tertiaire. La fonction amine tertiaire est tout particulièrement préférée.

Lorsque le copolymère au moins d'isoprène et de styrène porte au moins une fonction amine, préférentiellement une amine tertiaire, la fonction amine peut se situer sur la même extrémité (ou les mêmes extrémités) de la chaîne copolymère que la fonction SiOR ou sur une extrémité de la chaîne copolymère qui ne porte pas la fonction SiOR. Dans le cas de plusieurs fonctions amine sur la chaîne copolymère, certaines peuvent être présentes sur la même extrémité (ou les mêmes extrémités) de la chaîne copolymère que la fonction SiOR et d'autres sur une extrémité de la chaîne copolymère qui ne porte pas la fonction SiOR.

Selon le mode de réalisation particulier où le copolymère au moins d'isoprène et de styrène porte une fonction SiOR et une fonction amine, la fonction amine peut être aussi portée par le groupement qui comprend la fonction SiOR.

Selon ce mode de réalisation particulier, pour la synthèse de copolymères au moins d'isoprène et de styrène ayant une fonction SiOR et une fonction amine sur la même extrémité de chaîne copolymère, on peut se référer aux brevets ou demandes de brevet EP 1 457 501 B1, WO 2006/076629, EP 0 341 496 B1 ou WO 2009/133068 ou encore dans WO 2004/111094.

A titre d'exemples peuvent être cités comme agent de fonctionnalisation donnant lieu à la synthèse d'un copolymère au moins d'isoprène et de styrène porteur d'une fonction alcoxysilane et d'une fonction amine, les N,N-dialkylaminopropyltrialcoxysilanes, tels que le N,N-diméthylaminopropyltriméthoxysilane, le N,N-diéthylaminopropyltriméthoxysilane, le N,N-diméthylaminopropyltriéthoxysilane ou le N,N-diéthylaminopropyltriéthoxysilane, les azadialcoxysilanes cycliques tels que les N-alkyl-aza-dialcoxysilacycloalcanes, les 2-pyridyléthyltrialcoxysilanes, les 3-carbazol-éthyltrialcoxysilanes, les 3-alkylidèneamino-propyltrialcoxysilanes, les N-trialcoxysilylpropylmorpholines, notamment le 3-(N,N-di-méthylaminopropyl)triméthoxysilane, 3-(1,3-diméthylbutylidène)aminopropyltriéthoxy-silane, N-n-butyl-aza-2,2-diméthoxysilacyclo-pentane, 2-(4-pyridyléthyl)triéthoxy-silane, 2-(triméthoxysilyl)-pyridine.

La synthèse d'un copolymère portant une fonction amine sur une extrémité autre que celle qui porte la fonction SiOR, peut être réalisée par l'emploi d'un amorceur portant une fonction amine, en particulier par l'utilisation d'un amorceur qui est un amidure de lithium, tel que l'amidure de lithium de la pyrrolidine ou de l'hexaméthylèneimine, ou un organolithien portant une fonction amine tel que le diméthylaminopropyllithium et le 3-pyrrolidinopropyllithium. De tels amorceurs ont été décrits par exemple dans les brevets EP 0 590 490 B1 et EP 0 626 278 B1. Pour la synthèse de tels copolymère d'isoprène et de styrène portant une fonction SiOR et une fonction amine à leurs extrémités de chaîne différentes, on pourra se référer aux brevets EP 0 778 311 B1 et US 5 508 333.

Préférentiellement, le copolymère au moins d'isoprène et de styrène porte une fonction silyléther et une fonction amine, de préférence tertiaire, préférentiellement portée par le groupement qui comprend la fonction silyléther et qui est positionné à l'intérieur de la chaîne copolymère.

Il est entendu que le copolymère au moins d'isoprène et de styrène portant au moins une fonction SiOR peut être constitué par un mélange de copolymères au moins d'isoprène et de styrène qui se différencient des uns des autres par la nature chimique de la fonction SiOR, par sa position sur la chaîne copolymère, par la présence d'une fonction supplémentaire autre que SiOR, par leur microstructure ou encore par leur macrostructure.

La composition de caoutchouc conforme à l'invention peut comprendre en outre au moins un autre élastomère diénique, optionnel, qui n'est pas un copolymère au moins d'isoprène et de styrène portant au moins une fonction SiOR. Dans ce cas-là, le copolymère au moins d'isoprène et de styrène portant au moins une fonction SiOR représente préférentiellement au moins 50% de la masse totale d'élastomères diéniques, plus préférentiellement au moins 80% de la masse totale d'élastomères diéniques.

Cet autre élastomère diénique est un élastomère constitué au moins en partie (i.e., un homopolymère ou un copolymère) d'unités issues de monomères diènes (monomères porteurs de deux doubles liaisons carbone-carbone, conjuguées ou non).

Plus particulièrement, il peut être tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymère, il contient de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Cet autre élastomère diénique peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

Préférentiellement, cet autre élastomère diénique utilisé dans l'invention est choisi dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier de l'invention, cet autre élastomère diénique peut porter au moins une fonction, en particulier une fonction étain. Cet autre élastomère diénique est avantageusement couplé ou étoilé à l'étain. Selon un mode de réalisation tout particulièrement préférentiel, cet autre élastomère diénique est un copolymère au moins d'isoprène et de styrène couplé à l'étain.

Il est entendu que cet autre élastomère diénique peut être constitué par un mélange d'élastomères diéniques qui se différencient des uns des autres par leur microstructure, par leur macrostructure ou par la présence d'une fonction, par la nature ou la position de cette dernière sur la chaîne élastomère.

La composition de caoutchouc conforme à l'invention a pour autre caractéristique essentielle de comprendre une charge renforçante comprenant une charge inorganique renforçante.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.

Préférentiellement la charge inorganique est une silice. La silice utilisée peut être toute silice renforçante connue de l'homme du métier.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles.

Selon un mode de réalisation préférentiel, la charge renforçante est majoritairement constituée d'une charge inorganique renforçante, c'est-à-dire que la proportion de charge inorganique renforçante est supérieure à 50% en poids du poids total de la charge renforçante.

On notera que la charge renforçante peut contenir, en plus de la ou des charges inorganiques renforçantes précitées, au moins une charge organique, telle que du noir de carbone. Cette charge organique renforçante est alors préférentiellement présente selon une fraction pondérale inférieure à 50 % par rapport au poids total de la charge renforçante.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique).

Par exemple, les mélanges noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Comme exemples de charges organiques autres que des noirs de carbone, on peut citer les charges renforçantes organiques de polyvinylaromatique fonctionnalisé telles que décrites dans les demandes WO-A-2006/069792 et WO-A-2006/069793, ou encore les charges renforçantes organiques de polyvinyl non aromatique fonctionnalisé telles que décrites dans les demandes WO-A-2008/003434 et WO-A-2008/003435.

De manière préférentielle, le taux de charge renforçante est compris entre 30 et 200 pce, encore plus préférentiellement entre 40 et 150 pce.

Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante au copolymère au moins d'isoprène et de styrène, on utilise de manière bien connue un agent de couplage (ou agent de liaison) au moins bifonctionnel destiné à assurer une connexion suffisante, de nature chimique et/ou physique, entre la charge inorganique (surface de ses particules) et le copolymère. On utilise en particulier des organosilanes ou des polyorganosiloxanes au moins bifonctionnels.

Conviennent en particulier, sans que la définition ci-après soit limitative, des silanes polysulfurés répondant à la formule générale (I) suivante:

(I) Z - A - Sₓ - A - Z

, dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 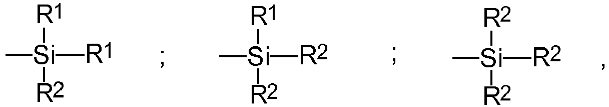 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

Dans les compositions de caoutchouc conformes à l'invention, le taux d'agent de couplage est avantageusement inférieur à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

A titre de charge équivalente de la charge inorganique renforçante décrite dans le présent paragraphe, peut être utilisée une charge renforçante d'une autre nature, notamment organique, dès lors que cette charge renforçante est recouverte d'une couche inorganique telle que silice, ou bien comporte à sa surface des sites fonctionnels, notamment hydroxyles, nécessitant l'utilisation d'un agent de couplage pour établir la liaison entre cette charge renforçante et l'élastomère diénique.

La composition de caoutchouc a pour autre caractéristique essentielle de comprendre un système plastifiant composé d'au moins une résine hydrocarbonée plastifiante et un plastifiant liquide.

Par « liquide » on entend une substance ayant la capacité de prendre à terme la forme de son contenant à température ambiante (23°C), par opposition notamment aux résines plastifiantes hydrocarbonées qui sont par nature solides à température ambiante.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*)*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C). La température de transition vitreuse Tg est mesurée de manière connue par DSC (*Differential Scanning Calorimetry*)*,* selon la norme ASTM D3418 (1999).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, betapinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le métaméthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Les résines d'homopolymère ou copolymère de terpène, en particulier à base de limonène comme par exemple les polylimonènes, sont préférées.

Le plastifiant liquide a pour fonction de ramollir la matrice en diluant l'élastomère et la charge renforçante ; sa Tg est préférentiellement inférieure à -20°C, plus préférentiellement inférieure à -40°C

Selon un mode de réalisation particulier de l'invention, le plastifiant liquide est un ester. Le plastifiant ester a pour structure tout composé qui répond à la définition donnée par la publication Pure & App. Chem., Vol. 67, Nos 819, pp. 1307-1375, 1995, selon les recommandations de IUPAC de 1995. Il s'agit d'un composé qui dérive d'un oxoacide et d'un composé ayant une fonction hydroxy.

Conviennent comme plastifiant ester par exemple les esters des acides carboxyliques (carboxylates), les esters des acides phosphoriques (phosphates), les esters des acides phosphoniques (phosphonates), les esters des acides sulfuriques (les sulfates), les esters des acides sulfoniques (les sulfonates) et leurs mélanges.

Préférentiellement, le plastifiant ester est un triester choisi dans le groupe constitué par les triesters d'acide carboxylique, d'acide phosphorique, d'acide sulfonique et les mélanges de ces triesters.

A titre de plastifiants phosphates par exemple, on peut citer ceux qui contiennent entre 12 et 30 atomes de carbone, par exemple le trioctyle phosphate.

A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés.

Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides.

Selon un mode de réalisation préférentiel de l'invention, le plastifiant ester est une huile végétale. A titre d'exemple peut être citée une huile choisie dans le groupe constitué par les huiles de lin, de carthame, de soja, de maïs, de coton, de navette, de ricin, d'abrasin, de pin, de tournesol, de palme, d'olive, de noix de coco, d'arachide, de pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%, notamment au moins égale à 80%. A titre d'huile végétale, est utilisée avantageusement une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Comme plastifiant ester, le triester de glycérol est préféré. Plus préférentiellement, qu'il soit d'origine synthétique ou naturelle (cas par exemple d'huiles végétales de tournesol ou de colza), l'acide gras du triester utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un autre mode de réalisation particulier de l'invention, le plastifiant liquide est une huile de pétrole choisie dans le groupe constitué par les huiles minérales, les huiles naphténiques, les huiles paraffiniques, les huiles DAE, les huiles MES (*Medium Extracted Solvates*)*,* les huiles TDAE (*Treated Distillate Aromatic Extracts*)*,* les huiles RAE (*Residual Aromatic Extract oils*)*,* les huiles TRAE (*Treated Residual Aromatic Extract*)*,* les huiles SRAE (*Safety Residual Aromatic Extract oils*) et les mélanges de ces composés.

Selon un mode de réalisation particulier de l'invention, le système plastifiant comprend une combinaison d'une résine d'homopolymère ou copolymère de terpène, de préférence à base de limonène, et d'un ester, de préférence un triester de glycérol.

De manière préférentielle, le système plastifiant, est présent dans la composition de caoutchouc selon un taux allant de 10 à 80 pce. En dessous du minimum visé l'effet technique peut s'avérer insuffisant, alors qu'au-delà du maximum le pouvoir collant des compositions à l'état cru sur les outils de mélangeage peut dans certains cas rendre très délicate leur mise en œuvre. Pour ces raisons, le taux du système plastifiant est plus préférentiellement compris dans un domaine allant de 20 à 70 pce.

Selon un mode de réalisation préférentiel de l'invention, le taux de plastifiant liquide et le taux de résine hydrocarbonée plastifiante sont respectivement compris dans un domaine allant de 5 à 60 pce, plus préférentiellement de 5 à 40 pce.

Les compositions de caoutchouc conformes à l'invention peuvent également contenir des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions de caoutchouc destinées à la fabrication de pneumatiques, comme par exemple des pigments, des agents de protection tels que cires anti-ozone, anti-ozonants chimiques, anti-oxydants, des agents antifatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers et les mélanges de tels composés.

L'invention a également pour objet un procédé de préparation d'une composition de caoutchouc conforme à l'invention, dans des mélangeurs appropriés connus en soi. Ce procédé comprend :
- la réalisation, à une température maximale comprise entre 130°C et 200°C, d'un premier temps de travail thermomécanique (parfois qualifié de phase " non productive ") des constituants de base nécessaires, à l'exception du système de réticulation, de ladite composition comprenant le copolymère au moins d'isoprène et de styrène portant au moins une fonction SiOR (avec R étant R étant l'hydrogène ou un radical alkyle en C₁ ― C₁₀, cycloalkyle en C₅-C₁₈, aryle en C₆ ― C₁₈ ou aralkyle en C₇ ― C₁₈), la charge renforçante, l'agent de couplage et le système plastifiant, puis
- la réalisation, à une température inférieure à ladite température maximale dudit premier temps, de préférence inférieure à 120°C, d'un second temps de travail mécanique au cours duquel est incorporé ledit système de réticulation.

La composition de caoutchouc ainsi obtenue peut ensuite être extrudée ou calandrée de manière connue en soi, sous la forme désirée, pour fabriquer des semi-finis et plus particulièrement des articles semi-finis d'un pneumatique qui comprennent cette composition.

L'invention a également pour objet un pneumatique qui incorpore dans au moins un de ses éléments constitutifs une composition de caoutchouc renforcée selon l'invention.

En raison de ses propriétés, la composition de caoutchouc conforme à l'invention est tout à fait appropriée pour former un semi-fini, préférentiellement une bande de roulement pour pneumatique. Un tel pneumatique présente une adhérence sur sol mouillé amélioré et en particulier un bon compromis de performance entre l'adhérence sur sol mouillé et la résistance au roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### II- EXEMPLES DE REALISATION DE L'INVENTION :

### II-1 Préparation des élastomères :

(a) On utilise la technique SEC (Size Exclusion Chromatography) qui permet de séparer les macromolécules en solution suivant leur taille à travers des colonnes remplies d'un gel poreux. Les macromolécules sont séparées suivant leur volume hydrodynamique, les plus volumineuses étant éluées en premier.
   Sans être une méthode absolue, la SEC permet d'appréhender la distribution des masses molaires d'un polymère. À partir de produits étalons commerciaux, les différentes masses molaires moyennes en nombre (*M*ₙ) et en poids (*M*_{w}) peuvent être déterminées et l'indice de polymolécularité (Ip = *M*_{w}/*M*ₙ) calculé *via* un étalonnage dit de Moore. Il n'y a pas de traitement particulier de l'échantillon de polymère avant analyse. Celui-ci est simplement solubilisé dans le solvant d'élution à une concentration d'environ 1 g/L. La solution est ensuite filtrée sur un filtre de porosité 0,45 µm avant injection.
   L'appareillage utilisé est une chaîne chromatographique "WATERS alliance". Le solvant d'élution est soit le tétrahydrofurane, soit le tétrahydrofurane + 1 vol.% de diisopropylamine + 1 vol.% de triéthylamine, le débit de 0,7 mL/min, la température du système de 35 °C et la durée d'analyse de 90 min. On utilise un jeu de quatre colonnes WATERS (1 colonne Styragel HMW7 + 1 colonne Styragel HMW6E + 2 colonnes Styragel HT6E). Le volume injecté de la solution d'échantillon de polymère est 100 µL. Le détecteur est un réfractomètre différentiel "WATERS 2414" et le logiciel d'exploitation des données chromatographiques est le système "WATERS EMPOWER".
   Les masses molaires moyennes calculées sont relatives à une courbe d'étalonnage réalisée pour des polyisoprènes de microstructure suivante : 7 % massique de motifs type 3,4, 68 % massique de motifs 1,4 cis.
   La proportion massique de chaînes n'ayant pas subi le couplage est estimée par la décomposition mathématique en somme de gaussiennes des chromatogrammes obtenus par SEC (en faisant l'hypothèse que les coefficients de réponse du détecteur réfractométrique (dn/dc) des différentes espèces présentes sont identiques).
(b) Pour les polymères et les compositions de caoutchouc, les viscosités Mooney ML(1+4) à 100 °C sont mesurées selon la norme ASTM D 1646.
   On utilise un consistomètre oscillant tel que décrit dans la norme ASTM D 1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utilisé pour entretenir ce mouvement après 4 minutes de rotation. La plasticité Mooney (ML 1+4) est exprimée en "unité Mooney" (UM, avec 1 UM = 0,83 N.m).
(c) Les températures de transition vitreuse Tg des polymères sont mesurées au moyen d'un calorimètre différentiel ("Differential Scanning Calorimeter").
(d) Les analyses RMN sont réalisées sur un spectromètre 500 MHz BRUKER équipé d'une sonde "large bande" BBIz 5 mm. Pour l'expérience RMN ¹H quantitative, la séquence utilisée utilise une impulsion 30° et un délai de répétition de 3 secondes. Les échantillons sont solubilisés dans le sulfure de carbone (CS₂). 50 µL de cyclohexane deutéré (C₆D₁₂) sont ajoutés pour le signal de lock.

Le spectre RMN ¹H permet de déterminer la microstructure des élastomères et de quantifier la fonction (CH₃)₂Si par intégration du signal caractéristique des protons SiCH₃ autour de δ = 0 ppm.

### Préparation du SIR A non fonctionnel :

Dans un réacteur de 10 L, maintenu sous pression d'azote d'environ 2 bars, contenant 5488 g de méthylcyclohexane, sont injectés 194 g de styrène et 590 g d'isoprène ainsi que 7,98 mL d'une solution de tetrahydrofurfuryl ether à 0,052 mol.L⁻¹ dans le méthycyclohexane. Après neutralisation des impuretés dans la solution à polymériser par addition de butyllithium, sont ajoutés 9,83 mL de BuLi à 0,18 mol.L⁻¹ dans le méthylcyclohexane. La polymérisation est conduite à 55 °C.

Après 37 minutes, le taux de conversion des monomères atteint 76 %. Ce taux est déterminé par pesée d'un extrait séché à 160 °C, sous la pression réduite de 200 mmHg. 1,4 mL d'une solution de méthanol à 2 mol.L⁻¹ dans le toluène sont alors ajoutés.

Le polymère est ensuite soumis à un traitement anti-oxydant par addition de 0,8 parties pour cent parties d'élastomères (pce) de 4,4'-méthylène-bis-2,6-tert-butylphénol et de 0,2 parties pour cent parties d'élastomères (pce) de *N*-(1,3-diméthylbutyl)-*N*'-phényl-p-phénylènediamine.

On sépare le copolymère ainsi traité de sa solution par une opération de stripping à la vapeur d'eau, puis séchage sur outil à cylindre à 100 °C pendant 10 minutes et enfin en étuve à 60 °C sous courant d'azote.

La viscosité ML de ce copolymère est 57.

La masse moléculaire *M*ₙ de ce copolymère, déterminée par la technique SEC, est de 355 000 g.mol⁻¹ et 1'Ip est de 1,10.

Le taux massique de motifs 1,4 est de 90,3 %, celui de motifs 3,4 est de 9,4 % et celui de motifs 1,2 est de 0,3 % (chacun de ces trois taux se rapporte aux unités isoprène). Le taux massique de styrène est de 10 %.

La Tg de ce copolymère est de - 51 °C.

### Préparation du SIR B fonctionnel SiOH en extrémité de chaîne élastomère :

Dans un réacteur de 10 L, maintenu sous pression d'azote d'environ 2 bars, contenant 5516 g de méthylcyclohexane, sont injectés 202 g de styrène et 586 g d'isoprène ainsi que 7,95 mL d'une solution de tetrahydrofurfuryl ether à 0,052 mol.L⁻¹ dans le méthycyclohexane. Après neutralisation des impuretés dans la solution à polymériser par addition de butyllithium, sont ajoutés 7,81 mL de BuLi à 0,218 mol.L⁻¹ dans le méthylcyclohexane. La polymérisation est conduite à 55 °C.

Après 38 minutes, le taux de conversion des monomères atteint 79 %. Ce taux est déterminé par pesée d'un extrait séché à 160 °C, sous la pression réduite de 200 mmHg. 9,77 mL d'une solution d'hexaméthylcyclotrisiloxane à 0,07 mol.L⁻¹ dans le méthylcyclohexane sont alors ajoutés. Après 30 minutes à 55 °C, 1,3 mL d'une solution de méthanol dans le toluène à 2 mol.L⁻¹ sont alors ajoutés.

Le polymère est ensuite soumis à un traitement anti-oxydant par addition de 0,8 parties pour cent parties d'élastomères (pce) de 4,4'-méthylène-bis-2,6-tert-butylphénol et de 0,2 parties pour cent parties d'élastomères (pce) de *N*-(1,3-diméthylbutyl)-*N*'-phényl-p-phénylènediamine.

On sépare le copolymère ainsi traité de sa solution par une opération de stripping à la vapeur d'eau, puis séchage sur outil à cylindre à 100 °C pendant 10 minutes et enfin en étuve à 60 °C sous courant d'azote.

La viscosité ML de ce copolymère est 51.

La masse moléculaire *M*ₙ de ce copolymère, déterminée par la technique SEC, est de 374 000 g.mol⁻¹ et l'Ip est de 1,03.

Le taux massique de motifs 1,4 est de 89,4 %, celui de motifs 3,4 est de 10,4 % et celui de motifs 1,2 est de 0,2 % (chacun de ces trois taux se rapporte aux unités isoprène). Le taux massique de styrène est de 12%.

La Tg de ce copolymère est de - 50 °C.

Le taux de fonction (CH₃)₂Si déterminé par RMN ¹H pour ce copolymère est de 2,5 mmol/kg.

### Préparation du SIR C fonctionnel aminoalcoxysilane à l'intérieur de la chaîne élastomère :

Dans un réacteur de 10 L, maintenu sous pression d'azote d'environ 2 bars, contenant 3416 g de méthylcyclohexane, sont injectés 123 g de styrène et 365 g d'isoprène ainsi que 0,10 mL d'une solution de tetrahydrofurfuryl ether à 4,4 mol.L⁻¹ dans le méthycyclohexane.

Après neutralisation des impuretés dans la solution à polymériser par addition de butyllithium, sont ajoutés 10,65 mL de BuLi à 0,18 mol.L⁻¹ dans le méthylcyclohexane. La polymérisation est conduite à 55 °C.

Après 26 minutes, le taux de conversion des monomères atteint 75 %. Ce taux est déterminé par pesée d'un extrait séché à 160 °C, sous la pression réduite de 200 mmHg. 9,24 mL d'une solution de 3-(*N,N*-diéthylaminopropyl)triméthoxysilane à 0,108 mol.L⁻¹ dans le méthylcyclohexane sont alors ajoutés. Après 30 minutes à 55 °C, le polymère est ensuite soumis à un traitement anti-oxydant par addition de 0,8 parties pour cent parties d'élastomères (pce) de 4,4'-méthylène-bis-2,6-tert-butylphénol et de 0,2 parties pour cent parties d'élastomères (pce) de *N*-(1,3-diméthylbutyl)-*N*'-phényl-p-phénylènediamine.

On sépare le copolymère ainsi traité de sa solution par une opération de stripping à la vapeur d'eau, puis séchage sur outil à cylindre à 100 °C pendant 10 minutes et enfin en étuve à 60 °C sous courant d'azote.

La viscosité ML de ce copolymère est 51.

La masse moléculaire *M*ₙ de ce copolymère, déterminée par la technique SEC, est de 318 000 g.mol⁻¹ et l'Ip est de 1,26. Le pourcentage de chaînes linéaires non couplées est d'environ 13 %.

Le taux massique de motifs 1,4 est de 88,1 %, celui de motifs 3,4 est de 11,4 % et celui de motifs 1,2 est de 0,5 % (chacun de ces trois taux se rapporte aux unités isoprène). Le taux massique de styrène est de 12%.

La Tg de ce copolymère est de - 48 °C.

### II-2 Préparation des compositions de caoutchouc :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa, on enregistre la valeur de tan δ observée à - 0°C (soit tan(δ)_{0°C}). On soumet également le même échantillon, à la température de 40°C, à un balayage en amplitude de déformation de 0,1% à 50% (cycle aller), puis de 50% à 0,1% (cycle retour) : pour le cycle retour, on enregistre l'écart de module complexe (ΔG^{∗}) à 40°C entre les valeurs à 0,1 et 50% de déformation (effet Payne).

On rappelle que, de manière bien connue de l'homme du métier, la valeur de (ΔG^{∗}) à 40°C (selon un balayage "en déformation", à température donnée) est représentative de l'hystérèse et de la résistance au roulement (plus (ΔG^{∗}) est faible, plus basse est l'hystérèse et donc la résistance au roulement) tandis que la valeur de tan(δ) 0°C (selon un balayage "en température", à déformation donnée) est représentative du potentiel d'adhérence sur sol mouillé (plus tan(δ) 0°C est élevée, meilleure est l'adhérence).

Le détail des formulations des compositions A à C (en pce) est consigné dans le tableau I ci-après.

Les compositions B et C sont conformes à l'invention en ce qu'elles comprennent un copolymère d'isoprène et de styrène (SIR) portant respectivement une fonction silanol (pour B) en extrémité de chaîne et une fonction alcoxysilane (pour C) à l'intérieur de la chaîne, une silice comme charge inorganique renforçante, un silane polysulfure comme agent de couplage, un système plastifiant composé d'un mélange d'huile de tournesol oléïque et d'une résine polylimonène.

La composition A n'est pas conforme à l'invention car le copolymère SIR est dépourvu de fonction silanol ou alcoxysilane.

**Tableau 1**

| | **A** | **B** | **C** |
|---|---|---|---|
| SIR A non fonctionnel (1) | 100 | - | - |
| SIR B fonctionnel (2) | - | 100 | - |
| SIR C fonctionnel (3) | - | - | 100 |
| N234 (4) | 3 | 3 | 3 |
| Silice (5) | 90 | 90 | 90 |
| Agent de couplage (6) | 7.2 | 7.2 | 7.2 |
| Plastifiant liquide (7) | 10 | 10 | 10 |
| Résine hydrocarbonée (8) | 25 | 25 | 25 |
| Cire anti ozone | 1.5 | 1.5 | 1.5 |
| Anti-oxydant (9) | 1.9 | 1.9 | 1.9 |
| DPG (10) | 1.69 | 1.69 | 1.69 |
| ZnO | 2.5 | 2.5 | 2.5 |
| Acide stéarique | 2 | 2 | 2 |
| Soufre | 1.4 | 1.4 | 1.4 |
| Accélérateur (11) | 1.8 | 1.8 | 1.8 |

| | | | |
|---|---|---|---|
| (1) SIR A avec 10% de motif styrène et 9.4% de motif 3,4 de la partie isoprénique (Tg -51°C), (2) SIR B avec 12% de motif styrène et 10.4% de motif 3,4 de la partie isoprénique (Tg -50°C) et une fonction silanol en extrémité de la chaîne élastomère, (3) SIR C avec 12% de motif styrène et 11.4% de motif 3,4 de la partie isoprénique (Tg -48°C) et une fonction diéthylaminopropylméthoxysilyle à l'intérieur de la chaîne élastomère, (4) Grade ASTM N234 (société Cabot) (5) Silice « Zeosil 1165 MP » de la société Rhodia (6) TESPT (« Si69 ») de la société Degussa (7) Huile de tournesol à 85 % en poids d'acide oléique, « Lubrirob Tod 1880 » de la société Novance (8) Résine polylimonène « Dercolyte L120 » de la société DRT (9) N-(1,3-diméthylbutyl)-N'-phényl-p-phénylènediamine, de la société Flexsys (10) Diphénylguanidine (« Perkacit » DPG de la société Flexsys) (11) N,N-dicylohexyl-2-benzothiazol-sulfénamide (« Santocure CBS » de la société Flexsys). | | | |

On procède pour la fabrication de ces compositions de la manière suivante : on introduit dans un mélangeur interne (taux de remplissage final : environ 70% en volume), dont la température initiale de cuve est d'environ 60°C, successivement l'élastomère copolymère, la silice, l'agent de couplage, le système plastifiant ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

### II-3 Résultats :

Les résultats des essais figurent dans le tableau II.

**Tableau II**

| **Composition** | **A** | **B** | **C** |
|---|---|---|---|
| ΔG^{∗} 40°C (10Hz) | 6.78 | 4.16 | 2.38 |
| tan(δ) 0°C (0.7 MPa 10Hz) | 0.6 | 0.68 | 0.72 |

On note pour les compositions B et C conformes à l'invention des valeurs de tan(δ) 0°C significativement plus élevées (respectivement +13 et +20%) que pour la composition A non-conforme à l'invention, ce qui augure une amélioration de la performance d'adhérence sur sol mouillé. Ce résultat est obtenu sans dégrader, bien au contraire, les propriétés d'hystérèse à 40°C. Par conséquent les compositions conformes à l'invention permettent de conférer aux bandes de roulement les comportant un compromis amélioré de performance d'adhérence sur sol mouillé et de résistance au roulement, notamment une amélioration de l'adhérence sur sol mouillé sans être au détriment de la résistance au roulement.

En résumé, l'utilisation conjointe d'un copolymère au moins d'isoprène et de styrène fonctionnel silanol ou alcoxysilane et d'un système plastifiant comprenant une résine hydocarbonée plastifiante et un plastifiant liquide permet d'améliorer encore la performance d'adhérence sur sol mouillé de pneumatique comportant un copolymère d'isoprène et de styrène en bande de roulement.

## Revendications

1. Composition de caoutchouc à base d'au moins :
• une charge renforçante comprenant une charge inorganique renforçante,
• un système plastifiant composé d'au moins une résine hydrocarbonée plastifiante et un plastifiant liquide,
• un élastomère copolymère au moins d'isoprène et de styrène portant au moins une fonction SiOR, R étant l'hydrogène ou un radical alkyle en C₁ - C₁₀, cycloalkyle en C₅-C₁₈, aryle en C₆ - C₁₈ ou aralkyle en C₇ - C₁₈
• et un agent de couplage pour lier la charge inorganique à l'élastomère.

2. Composition selon la revendication 1, **caractérisé en ce que** l'élastomère copolymère est constitué d'unités d'isoprène et de styrène.

3. Composition selon la revendication 1, **caractérisé en ce que** l'élastomère copolymère est un terpolymère constitué d'unités d'isoprène, de styrène et de butadiène.

4. Composition selon l'une quelconque des revendications 1 à 3, **caractérisée en ce que** l'élastomère copolymère porte en outre au moins une fonction amine, de préférence tertiaire

5. Composition selon la revendication 4, **caractérisé en ce que** l'amine est portée par le groupement qui comprend la fonction SiOR.

6. Composition selon l'une quelconque des revendications 1 à 5, **caractérisée en ce que** R est un radical alkyle en C₁-C₄, préférentiellement en C₁ ou C₂.

7. Composition selon l'une quelconque des revendications 1 à 6, **caractérisée en ce que** le plastifiant liquide est un ester.

8. Composition selon la revendication 7, **caractérisé en ce que** le plastifiant liquide est un triester de glycérol, préférentiellement le trioléate de glycérol.

9. Composition selon la revendication 8, **caractérisé en ce que** le plastifiant liquide est une huile végétale.

10. Composition selon l'une quelconque des revendications 1 à 6, **caractérisée en ce que** le plastifiant liquide est une huile de pétrole.

11. Composition selon l'une quelconque des revendications 1 à 10, **caractérisé en ce que** le taux du système plastifiant est compris dans un domaine allant de 10 à 80 pce.

12. Composition selon l'une quelconque des revendications 1 à 11, **caractérisée en ce que** la charge renforçante est constituée majoritairement d'une charge inorganique renforçante.

13. Composition selon l'une quelconque des revendications 1 à 12, **caractérisée en ce que** la charge inorganique renforçante est une silice.

14. Produit semi-fini en caoutchouc comprenant une composition selon l'une quelconque des revendications 1 à 13.

15. Produit semi-fini en caoutchouc selon la revendication 14, **caractérisé en ce qu'**il est une bande de roulement.

16. Pneumatique comprenant un produit semi-fini en caoutchouc selon la revendication 14 ou 15.

17. Procédé de préparation d'une composition de caoutchouc selon l'une quelconque des revendications 1 à 13, **caractérisée en ce qu'**il comprend :
- la réalisation, à une température maximale comprise entre 130°C et 200°C, d'un premier temps de travail thermomécanique (parfois qualifié de phase " non productive ") des constituants de base nécessaires, à l'exception du système de réticulation, de ladite composition comprenant l'élastomère copolymère, la charge renforçante, le plastifiant, puis
- la réalisation, à une température inférieure à ladite température maximale dudit premier temps, de préférence inférieure à 120°C, d'un second temps de travail mécanique au cours duquel est incorporé ledit système de réticulation.

## Patentansprüche

1. Kautschukzusammensetzung auf Basis von mindestens:
• einem verstärkenden Füllstoff, der einen verstärkenden anorganischen Füllstoff umfasst,
• einem Weichmachersystem, das aus mindestens einem weichmachenden Kohlenwasserstoffharz und einem flüssigen Weichmacher besteht,
• einem Copolymer-Elastomer von mindestens Isopren und Styrol mit mindestens einer SiOR-Funktion, wobei R für Wasserstoff oder einen C₁-C₁₀-Alkyl-, C₅-C₁₈-Cycloalkyl-, C₆-C₁₈-Aryl- oder C₇-C₁₈-Aralkylrest steht,
• und einem Kupplungsmittel zum Binden des anorganischen Füllstoffs an das Elastomer.

2. Zusammensetzung nach Anspruch 1, **dadurch gekennzeichnet, dass** das Copolymer-Elastomer aus Isopren- und Styrol-Einheiten besteht.

3. Zusammensetzung nach Anspruch 1, **dadurch gekennzeichnet, dass** es sich bei dem Copolymer-Elastomer um ein Terpolymer aus Isopren-, Styrol- und Butadien-Einheiten handelt.

4. Zusammensetzung nach einem der Ansprüche 1 bis 3, **dadurch gekennzeichnet, dass** das Copolymer-Elastomer außerdem mindestens eine Aminfunktion, vorzugsweise eine tertiäre Aminfunktion, trägt.

5. Zusammensetzung nach Anspruch 4, **dadurch gekennzeichnet, dass** die Gruppe, die die SiOR-Funktion umfasst, das Amin trägt.

6. Zusammensetzung nach einem der Ansprüche 1 bis 5, **dadurch gekennzeichnet, dass** R für einen C₁-C₄-Alkylrest, vorzugsweise einen C₁- bis C₂-Alkylrest steht.

7. Zusammensetzung nach einem der Ansprüche 1 bis 6, **dadurch gekennzeichnet, dass** es sich bei dem flüssigen Weichmacher um einen Ester handelt.

8. Zusammensetzung nach Anspruch 7, **dadurch gekennzeichnet, dass** es sich bei dem flüssigen Weichmacher um einen Glycerintriester, vorzugsweise Glycerintrioleat, handelt.

9. Zusammensetzung nach Anspruch 8, **dadurch gekennzeichnet, dass** es sich bei dem flüssigen Weichmacher um ein Pflanzenöl handelt.

10. Zusammensetzung nach einem der Ansprüche 1 bis 6, **dadurch gekennzeichnet, dass** es sich bei dem flüssigen Weichmacher um ein Mineralöl handelt.

11. Zusammensetzung nach einem der Ansprüche 1 bis 10, **dadurch gekennzeichnet, dass** der Gehalt des Weichmachersystems in einem Bereich von 10 bis 80 phe liegt.

12. Zusammensetzung nach einem der Ansprüche 1 bis 11, **dadurch gekennzeichnet, dass** es sich bei dem verstärkenden Füllstoff mehrheitlich um einen verstärkenden anorganischen Füllstoff handelt.

13. Zusammensetzung nach einem der Ansprüche 1 bis 12, **dadurch gekennzeichnet, dass** es sich bei dem verstärkenden anorganischen Füllstoff um eine Kieselsäure handelt.

14. Kautschuk-Halbzeug, umfassend eine Zusammensetzung nach einem der Ansprüche 1 bis 13.

15. Kautschuk-Halbzeug nach Anspruch 14, **dadurch gekennzeichnet, dass** es sich um eine Lauffläche handelt.

16. Reifen, umfassend ein Kautschuk-Halbzeug nach Anspruch 14 oder 15.

17. Verfahren zur Herstellung einer Kautschukzusammensetzung nach einem der Ansprüche 1 bis 13, **dadurch gekennzeichnet, dass** es Folgendes umfasst:
• die Durchführung eines ersten Schritts der thermomechanischen Bearbeitung (manchmal als "nichtproduktive" Phase bezeichnet) der benötigten Grundbestandteile der Zusammensetzung, umfassend das Copolymer-Elastomer, den verstärkenden Füllstoff und den Weichmacher, mit Ausnahme des Vernetzungssystems, bei einer Maximaltemperatur von zwischen 130 °C und 200 °C, dann
• die Durchführung einer zweiten mechanischen Bearbeitung bei einer unter der Maximaltemperatur des ersten Schritts, vorzugsweise unter 120 °C, liegenden Temperatur, in deren Verlauf das Vernetzungssystem eingearbeitet wird.

## Claims

1. Rubber composition based on at least:
• one reinforcing filler comprising a reinforcing inorganic filler,
• one plasticizing system composed of at least one plasticizing hydrocarbon resin and one liquid plasticizer,
• one elastomer which is a copolymer at least of isoprene and styrene bearing at least one SiOR functional group, R being hydrogen or a C₁-C₁₀ alkyl, C₅-C₁₈ cycloalkyl, C₆-C₁₈ aryl or C₇-C₁₈ aralkyl radical,
• and one coupling agent for bonding the inorganic filler to the elastomer.

2. Composition according to Claim 1, **characterized in that** the copolymer elastomer is composed of units of isoprene and styrene.

3. Composition according to Claim 1, **characterized in that** the copolymer elastomer is a terpolymer composed of units of isoprene, styrene and butadiene.

4. Composition according to any one of Claims 1 to 3, **characterized in that** the copolymer elastomer additionally bears at least one amine functional group, preferably a tertiary amine functional group.

5. Composition according to Claim 4, **characterized in that** the amine is borne by the group which comprises the SiOR functional group.

6. Composition according to any one of Claims 1 to 5, **characterized in that** R is a C₁-C₄ alkyl radical, preferably a C₁ or C₂ alkyl radical.

7. Composition according to any one of Claims 1 to 6, **characterized in that** the liquid plasticizer is an ester.

8. Composition according to Claim 7, **characterized in that** the liquid plasticizer is a glycerol triester, preferably glycerol trioleate.

9. Composition according to Claim 8, **characterized in that** the liquid plasticizer is a vegetable oil.

10. Composition according to any one of Claims 1 to 6, **characterized in that** the liquid plasticizer is a petroleum oil.

11. Composition according to any one of Claims 1 to 10, **characterized in that** the content of the plasticizing system is within a range extending from 10 to 80 phr.

12. Composition according to any one of Claims 1 to 11, **characterized in that** the reinforcing filler is predominantly composed of a reinforcing inorganic filler.

13. Composition according to any one of Claims 1 to 12, **characterized in that** the reinforcing inorganic filler is a silica.

14. Semi-finished rubber product comprising a composition according to any one of Claims 1 to 13.

15. Semi-finished rubber product according to Claim 14, **characterized in that** it is a tread.

16. Tyre comprising a semi-finished rubber product according to Claim 14 or 15.

17. Process for the preparation of a rubber composition according to any one of Claims 1 to 13, **characterized in that** it comprises:
- carrying out, at a maximum temperature of between 130°C and 200°C, a first step of thermomechanical working (sometimes described as "non-productive" phase) of the necessary base constituents, with the exception of the crosslinking system, of the said composition comprising the copolymer elastomer, the reinforcing filler and the plasticizer, then
- carrying out, at a temperature lower than the said maximum temperature of the said first step, preferably lower than 120°C, a second step of mechanical working during which the said crosslinking system is incorporated.
